# EUROPÄISCHE PATENTSCHRIFT

(11) **EP 0 450 478 B1**
(45) Veröffentlichungstag und Bekanntmachung des Hinweises auf die Patenterteilung: **04.06.1997**
(21) Anmeldenummer: 91104842.9
(22) Anmeldetag: 27.03.1991
(51) Int. Cl.: C08K 5/00, C08L 33/12, C08F 2/44, C08K 5/09

(54) **Farbiges Acrylglas mit organischen Pigmenten**
Coloured acrylic glass containing organic pigments
Verre acrylique coloré avec des pigments organiques

(30) Priorität: 05.04.1990 DE 4010987
(43) Veröffentlichungstag der Anmeldung: 09.10.1991
(73) Patentinhaber: Röhm GmbH, 64293 Darmstadt (DE)
(72) Erfinder: Lichtenstein, Hans, W-6113 Babenhausen (Hergershausen) (DE); Ebert, Silvia, W-6100 Darmstadt (DE); Krieg, Manfred, Dr., W-6100 Darmstadt (DE)

(56) Entgegenhaltungen:
- DE-B- 1 121 810
- GB-A- 708 124
- DATABASE WPIL Week 9012, Derwent Publications Ltd., London, GB; AN 90-086457

## Beschreibung

### Gebiet der Erfindung

Die Erfindung betrifft mit organischen Pigmenten eingefärbtes, in seiner Wetterechtheit verbessertes Acrylglas.

### Stand der Technik

Die Grundmasse der Acrylgläser, insbesondere das Polymethylmethacrylat, aber vielfach auch Copolymerisate des Methylmethacrylats, stellt eine praktisch farblose Substanz dar, deren ausgezeichnete Licht- und Witterungsbeständigkeit auch durch Einfärben erhalten bleibt und längerfristig, z.B. als Platte genutzt werden soll.

Kunststoffe, so auch Acrylkunststoffe und hier vor allem die Acrylgläser auf Polymethylmethacrylat-Basis werden in hohem Maße in eingefärbtem Zustand verwendet. Die Farbmittel zur Einfärbung von Kunststoffen müssen eine Reihe von technischen Anforderungen erfüllen: Hitzeechtheit, Oxidationsbeständigkeit, Migrationsechtheit, Lichtechtheit, Wetterechtheit und Dispergierbarkeit bei der Einarbeitung.

Durchsichtige Einfärbungen werden meist mit organischen, im Monomeren bzw. im Polymerisat echt oder kolloidal löslichen Farbstoffen ausgeführt, während durchscheinende und gedeckte Einfärbungen durch Verwendung anorganischer Weiß- und Farbpigmente oder Metallpulver erhalten werden (Kunststoff-Handbuch, Band IX, Polymethacrylate, Carl Hanser Verlag, München, 1975).

Für die Einfärbung von Acrylglas werden bzw. wurden in einem erheblichen Anteil auch Cadmium-Pigmente mit der Zusammensetzung Cadmiumsulfid bzw. -sulfid/selenid eingesetzt, deren Farbskala von grünstichigem Gelb über Rot bis zum dunklen Bordeaux geht. Neben hervorragenden färberischen Eigenschaften und guter Licht- und Hitzebeständigkeit, zeichnen sie sich noch durch hohe Wetterechtheit aus. Wegen ihrer geringen Löslichkeit werden Cadmium-Pigmente für weitgehend untoxisch erachtet. Jedoch wird bei der Entsorgung von Cadmium-Pigment-haltigen Abfällen, vor allem in der Müllverbrennung, Cadmium in umweltbelastender Form freigesetzt.

Für die Herstellung von praktisch mit den Cadmium-Pigmenten farbgleich eingefärbten aber Cadmium-freien Acrylgläsern werden auf dem Markt angebotene organische Farbpigmente auf ihre Brauchbarkeit geprüft und eingesetzt. Anstelle von organischen Farbpigmenten können auch Farbmittel, die aus löslichem organischen Farbstoff und Pigment, z.B. Titandioxid, d.h. Pigmentpräparationen, bestehen, als Cadmium-Pigment-Ersatz geprüft und eingesetzt werden.
(Ullmann, Encyklopädie der technischen Chemie, 4. Auflage, Band 15, S. 275 - 279).

Die bisherigen Arbeiten mit Cadmium-Pigment-ähnlichen Ersatzeinfärbungen zeigten, daß entsprechend eingefärbte Acrylgläser vor allem eine deutlich reduzierte Wetterechtheit gegenüber den bekannten mit Cadmium-Pigment eingefärbten Acrylgläsern haben.

In GB-A 0,708,124 ist ein nicht gedeckt eingefärbtes, durchsichtiges Acrylglas mit fluoreszierenden Eigenschaften beschrieben. Um die Lichtechtheit zu verbessern, werden Zinksalze zugesetzt, welche durch spezielle Lösungsmittel wie z.B. Methacrylsäure gelöst werden müssen. Methacrylsäure für sich allein leistet in diesem System keinen Beitrag zur Verbesserung der Lichtechtheit.

In DE-A 11 21 810 werden mit Phtalocyaninpigmenten eingefärbte Kunststoffe, u.a. auf Basis PMMA, wobei die Empfindlichkeit dieser Pigmente gegenüber Peroxiden, die als Radikalinitiatoren üblich sind, durch verschiedene Reagentien, wie Heteropolysäuren bzw. Isopolysäuren unterbunden werden soll. Die genannten Säuren sind nicht löslich in der zu polymerisierenden Monomerpräparation. Sie dienen ausschließlich der Herstellung oxidationsstabiler Phtalocyaninpigmente.

### Aufgabe und Lösung

Mit organischen Farbpigmenten oder mit organischen Farbstoffen hergestellte Acrylgläser können nicht in allen Anforderungen, wie sie als Stand der Technik her von anorganischen Buntpigmenten enthaltenden Acrylgläsern bekannt und gefordert sind, genügen. Neben schlechter Verteilung der Färbemittel im Glas, zeigt sich insbesondere im Langzeitverhalten der Färbung der Acrylgläser, daß es vor allem ihre Wetterechtheit zu verbessern gilt.

Es wurde gefunden, daß die Wetterechtheit von mit organischen Farbpigmenten bzw. organischen Farbstoffen erzielten gedeckten Einfärbungen in Acrylgläsern durch in der Polymermatrix vorhandene Säuren verbessert wird, d.h. die beim Einfärben erzielte Farbe bzw. der erzielte Farbton werden weitgehend gegen Witterungseinflüsse stabilisiert. Dadurch wird die Licht- und Witterungsbeständigkeit der mit organischen Farbmitteln erzielten Einfärbung an die ausgezeichnete Licht- und Witterungsbeständigkeit des Polymethylmethacrylats, d.h. der Grund-Polymermatrix der Acrylgläser, angeglichen.

Die in der eingefärbten Polymermatrix vorhandenen und die Einfärbung stabilisierenden Säuren sind chemische Verbindungen, die ionogen gebundene Wasserstoffatome enthalten, die durch Metallatome unter Salzbildung ersetzbar sind. Diese sauren chemischen Verbindungen können sowohl anorganische als auch organische Säuren sein, sie können ein- oder mehrwertige Säuren sein und ihre Säurestärke, gemessen als Dissoziationsgrad kann praktisch zwischen 0,1 und 100 % liegen, d.h. es können schwache und/oder starke Säuren als Färbungsstabilisatoren verwendet werden.

Zur Stabilisierung der Einfärbung werden die Säuren in Mengen von 0,01 bis 3 Gew.-% bezogen auf das Gewicht des eingefärbten Acrylglases benötigt. Die Löslichkeit der Säuren in der Glaspolymermatrix liegt bei ≥ 0,01 Gew.-%.

### Die Erfindung betrifft danach:

Gedeckt eingefärbtes Acrylglas enthaltend ein organisches Pigment bzw. einen organischen Farbstoff dadurch gekennzeichnet,
daß das Glas aus
A) einer Polymermatrix, die aus 70 bis 100 Gew.-% Methylmethacrylat-Monomereinheiten aufgebaut ist,
B) 0,01 bis 5 Gew.-%, bezogen auf das Acrylglas, organischem Pigment bzw. organischen Farbstoff in Kombination mit Weißpigmenten enthaltendem Farbmittel,
C) 0,01 bis 3 Gew.-%, bezogen auf das Acrylglas, einer in der Polymermatrix vorhandenen Säure, die zu mindestens 0.1 Gew.% in der zu polymerisierenden Monomerpraeparation löslich ist, und
D) 0 bis 3 Gew.-%, bezogen auf das Acrylglas, weiteren Zusätzen
besteht.

Die Säure kann in der Polymermatrix gelöst und/oder in dieser durch Copolymerisation oder durch polymeranaloge Reaktion eingebaut sein und/oder an dem organischen Pigment bzw. dem organischen Farbstoff physikalisch bzw. chemisch gebunden sein.

Die Herstellung der erfindungsgemäß zusammengesetzten, gedeckt eingefärbten Acrylgläser wird nach bekannten Methoden durch Polymerisation in Substanz von entsprechend zusammengesetzten Monomerdispersionen oder Präpolymerdispersionen oder von Monomer-Polymer-(Gewichtsverhältnis ca. 95 - 60 : 5 - 40)-Dispersion durchgeführt.
So erhaltene organisch-buntpigmentierte Acrylgläser haben, nach Bewitterungsversuchen in Langzeittests, sehr hohe Wetterechtheit und werden so den mit Cadmium-Pigmenten erzielten leuchtenden Acrylglasfärbungen ebenbürtig. Ein Haupteinsatzgebiet so eingefärbter Acrylgläser ist die Werbung im Außenbereich.

### Durchführung der Erfindung

### A) Monomere zur Herstellung der Polymermatrix

Das Matrixpolymerisat auf der Basis von 70 bis 100 Gew.-% Methylmethacrylat kann noch in Anteilen von 0 bis 30 Gew.-% aus weiteren Comonomeren aufgebaut sein. Genannt seien andere Ester der Methacrylsäure bzw. Acrylsäure, wie z.B. Acrylsäuremethylester, Acrylsäurebutylester, Methacrylsäureäthylester, 2-Hydroxiäthylacrylat, 2-Hydroxipropylmethacrylat, Glycidylmethacrylat; weiter Amide der Acryl- bzw. Methacrylsäure wie Acrylamid und Methacrylamid, sowie davon abgeleitete N-substituierte Amide, u.a. N-Methylmethacrylamid. Ferner können u.a. Acrylnitril, Styrol, α-Methylstyrol, Vinylester von Carbonsäuren, wie Vinylacetat als weitere Comonomere zur Herstellung der Acrylglasmatrix mitverwendet werden.

Besonders erwähnt sei die Mitverwendung von vernetzenden Monomeren, wie z.B. Äthylenglykoldimethacrylat, 1,4 Butandioldimethacrylat oder Allylverbindungen, wie z.B. Allylmethacrylat oder Triallylcyanurat, in Anteilen von 0 bis 3 Gew.-% des Matrixpolymerisats.

### B) Organische Pigmente und organische Farbstoffe für Buntpigmentierungen.

Zur erfindungsgemäßen Buntpigmentierung von Acrylglas in leuchtenden Farbtönen des Rot, Orange, Gelb oder Grün eignen sich organische Farbpigmente wie sie für Einfärbungen von Kunststoffen bekannt und in Sortimenten zusammengefaßt sind: z.B. Bayplast (Bayer), PV-(Echt) (Hoechst), Vynamon (ICI), Paliotol (BASF), Sandorin (Sandoz). Solche Pigmente sind überwiegend hitze- und migrationsecht und bieten gute Benetz- und Dispergierbarkeit in verschiedenen Kunststoffen. Lichtechtheit und Wetterbeständigkeit sind dagegen unterschiedlich, weil nicht überall hohe Echtheiten erforderlich sind (Ullmann, Encyklopädie der technischen Chemie, 4. Auflage, Band 15, S. 175 bis 279, besonders 276).

Dieser Stand der Technik machte es für langjährig, außen anzuwendende, mit organischen Farbmitteln gedeckt eingefärbte Acrylgläser erforderlich, eine Stabilisierung der Einfärbung zu finden. Dies wurde überraschenderweise durch die einfache Maßnahme des Zusetzens von Säureverbindungen bei der Herstellung so eingefärbter Acrylgläser erreicht.

Pigmenteinfärbungen, die sich erfindungsgemäß stabilisieren lassen sind hergestellt mit:
Einzelpigmenten beispielsweise der oben genannten Pigmentsortimenten, wie beispielsweise Pigment Yellow 151, Pigment Yellow 139, Pigment Red 242;

Organischen Farbstoffen, die in Kombination mit Weißpigmenten, z.B. Titandioxid, für deckende Einfärbungen geeignet sind:
beispielsweise Macro-Lex-Farbstoffe (Bayer), Solvaperm-Farbstoffe (Hoechst) und Thermoplast-Farbstoffe (BASF).

Mit ihnen werden zwar gute Licht- und Hitzeechtheiten aufweisende Einfärbungen erhalten (Ullmann, loc.cit. Seite 278), aber langjährige Lichtechtheit bei gleichzeitig guter Wetterechtheit der gedeckten Einfärbungen, auch der Kombinationen von organischen Farbstoffen und Weißpigmenten, in Acrylgläsern, wird erst durch den erfindungsgemäßen Zusatz von sauren Verbindungen erreicht.

Als Einfärbung des Acrylglases ist das Färbemittel, organisches Pigment und/oder Kombination organischer Farbstoff/Weißpigment, in Mengen von 0,01 bis 5 Gew.-%, insbesondere in Mengen von 0,05 bis 3 Gew.-% und vor allem in Mengen von 0,1 bis 1 Gew.-% im organischen Glas enthalten. Mit Hilfe verschiedener Farbmittelkonzentrationen lassen sich bei gleichbleibender Acrylglasplattendicke unterschiedliche Einfärbungen, also Farben erzeugen.
Für die Kombinationen organischer Farbstoff/Weißpigment, die vorteilhafterweise auch getrennt den zu polymerisierenden Monomeren bzw. dem Monomer-Präpolymer-Gemisch bzw. dem Monomer-Polymer-Gemisch zugegeben werden, kann das Gewichtsverhältnis organischer Farbstoff : Pigment bei 1 : 99 bis 99 : 1, vor allem bei 20 : 80 bis 80 : 20 liegen.

### C). Säuren

Die in den gedeckt eingefärbten Acrylgläsern vorhandenen und die Einfärbung stabilisierenden Säuren sind chemische Verbindungen mit ionogen gebundenen Wasserstoffatomen, ein- und/oder mehrwertig, anorganischer oder organischer Zuordnung. In ihrer Säurestärke können die einzelnen brauchbaren sauren Verbindungen stark variieren, d.h. es können schwache und/oder starke Säuren als Färbungsstabilisatoren eingesetzt werden. Die zu verwendenden Säuren sind im allgemeinen Flüssigkeiten oder Festsubstanzen und haben Löslichkeiten in der zu polymerisierenden Monomerpräparation von mindestens 0,1 Gew.-%. Es sind niedermolekulare Säuren, d.h. es sind Säuren, deren Molekulargewichte im Bereich von 30 bis etwa 1 000 Dalton, vor allem im Bereich von 30 bis etwa 500 Dalton, liegen. Anstelle von Säuren können auch deren Anhydride als Säurevorläufer bei der Herstellung des erfindungsgemäßen Acrylglases eingesetzt werden. Mit H₂O, das immer in Mengen von mindestens 0,01 Gew.-% in dem Acrylglas vorhanden ist bzw. unter den Witterungsbedingungen in dieses hineindiffundiert, wird aus dem Anhydrid die als Färbungsstabilisator notwendige Säure generiert.

Geeignete anorganische Säuren bzw. Anhydride sind beispielsweise: P₂O₅, Phosphorsäure, Polyphosphorsäure, Borsäure oder Di-2-ethylhexylphosphat als saurer Phosphorsäureester.
Brauchbare organische Säuren bzw. Anhydride, sowohl gesättigte als auch ungesättigte, aliphatische, aromatische oder heterocyclische Carbonsäuren sind beispielsweise: Ameisensäure, Essigsäure, Essigsäureanhydrid, Milchsäure, Stearinsäure, Acrylsäure, Methacrylsäure, Maleinsäure, Maleinsäureanhydrid, Fumarsäure, Itakonsäure, Ascorbinsäure, Benzoesäure, Benzophenoncarbonsäure, Benztriazolcarbonsäure, Zimtsäure.
Sie sind in Mengen von 0,01 bis 3 Gew.-%, vor allem in Mengen von 0,05 bis 2 Gew.-% und insbesondere in Mengen von 0,1 bis 1 Gew.-% in dem Acrylglas vorhanden.

### D) Hilfsstoffe

In den erfindungsgemäßen Acrylgläsern können noch Hilfsstoffe enthalten sein, die beispielsweise wie Initiatoren oder Regler für die Polymerisation benötigt werden, oder weiter noch Weichmacher, Flammschutzmittel oder UV-Absorber, d.h. Stoffe, die zu bestimmten Anwendungen im Acrylglas vorteilhaft vorhanden sind. Diese Stoffe sind in Mengen von 0 bis 3 Gew.-%, insbesondere in Mengen von 0,01 bis 2 Gew.-% im Polymerisat enthalten.

Es hat sich erfindungsgemäß gezeigt, daß der durch Säuren bedingte Stabilisierungeffekt von mit organischen Farbmitteln erzeugten, gedeckten Acrylglasfärbungen vorteilhaft durch Zusatz von UV-Absorbern noch verstärkt werden kann. Solche UV-Absorber sind beispielsweise 2-(2-Hydroxy-5-methylphenyl)-benztriazol ("Tinuvin P") oder Bis-2,2,6,6-Tetramethyl-4-piperidylsebacat ("Tinuvin 770"). Die UV-Absorber können vorzugsweise in Mengen von 0,05 bis 1 Gew.-% in dem Acrylglas vorhanden sein.

### Herstellung der Polymerisate

Die Durchführung der Polymerisation von Mischungen der Stoffe A + B + C + D kann in an sich bekannter Weise unter Verwendung der Erfahrungen der Technik, z.B. in Glaskammern durchgeführt werden (vgl. H. Rauch-Puntigam und Th. Völker in "Acryl- und Methacrylverbindungen", Springer-Verlag 1967). Als Initiatoren für die radikalische Polymerisation der Monomeren, bzw. dem Monomer-Präpolymer oder dem Monomer-Polymer-Gemisch, können beispielsweise Peroxid- oder Azoverbindungen in den üblichen Mengen verwendet werden. Zur Steuerung des Molekulargewichts eignen sich die bekannten Regler, wie z.B. organische SH-Verbindungen. Polymerisationsgrad und damit das Molekulargewicht der Polymermoleküle des Acrylglases, läßt sich bekanntlich durch die Initiatorkonzentration und/oder Reglerkonzentration einstellen. In der Regel liegen bei der Polymerisation die Initiatormengen bei 0,01 bis 1 Gew.-% und die Reglermengen zwischen 0,01 und 0,5 Gew.-% der zu polymerisierenden ungesättigten Verbindungen. Die Molgewichte (Mw) der Matrixpolymerisate liegen im allgemeinen im Bereich 2 x 10⁵ bis 5 x 10⁶ Dalton, ermittelt durch Gel-Permeations-Chromatographie (Angew. Chemie 82 (1970), 675). Das Matrixpolymerisat kann auch schwach vernetzt sein. Die Vicat-Erweichungstemperatur (nach DIN 53 460, Verfahren B) liegt in der Regel > 100 Grad C.

### Prüfungen zur Wetterechtheit der Einfärbungen.

Diese erfolgten durch
1. 5 000-stündige Xenotest-Bewitterung,
2. 1-jährige Freibewitterung und
3. Messung und Beurteilung

### Zu 1.

Durchführung der Xenotest-Bewitterung nach
DIN 53 387:
Belichtung
- 102 Minuten-Trocken - bei ca. 65 % rel. Luftfeuchtigkeit
- 18 Minuten-Beregnung - bei etwa 90 - 100 % rel. Luftfeuchtigkeit und 40 - 55 Grad C.

### Zu 2.

Freibewitterung nach DIN 53 386
Die Prüfung erfolgt in einem Probengestell, das die Proben 45 Grad gegen Süden geneigt festhält.

### Zu 3.

Messung des Farborts erfolgt mit einem Spektralphotometer im Bereich von 380 - 780 nm nach DIN 5033 Teil 4.
Der Farbabstand in ΔE-Werten ist nach DIN 6174 zwischen der unbewitterten und der bewitterten Probe nach der Cielab-Formel für künstliches Tageslicht D65 ermittelt. Die ΔE-Werte sind relative Werte, d.h. beispielsweise ein doppelt so hoher ΔE-Wert zeigt an, daß die Farbabweichung nach Bewitterung doppelt so hoch ist.

### BEISPIELE

Die folgenden Beispiele dienen der Erläuterung der Erfindung.

### Beispiel 1

Zunächst wird ein farbloser Grundansatz bestehend aus

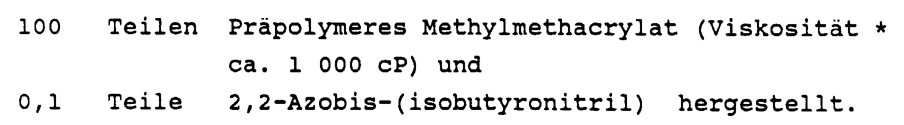

Anschließend gibt man eine Farbpaste bestehend aus

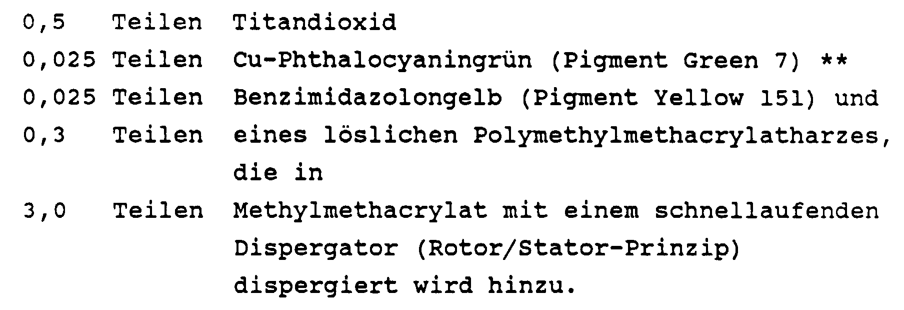

Der Ansatz wird intensiv gerührt, in eine mit 4 mm distanzierte Silikatglaskammer gefüllt und 15 Stunden bei 45 Grad C im Wasserbad polymerisiert. Die Endpolymerisation erfolgt in einem Temperschrank bei 120 Grad C.
Nach dem Abkühlen und Entformen wird eine undurchsichtige gelbgrüne Acrylglasplatte erhalten.

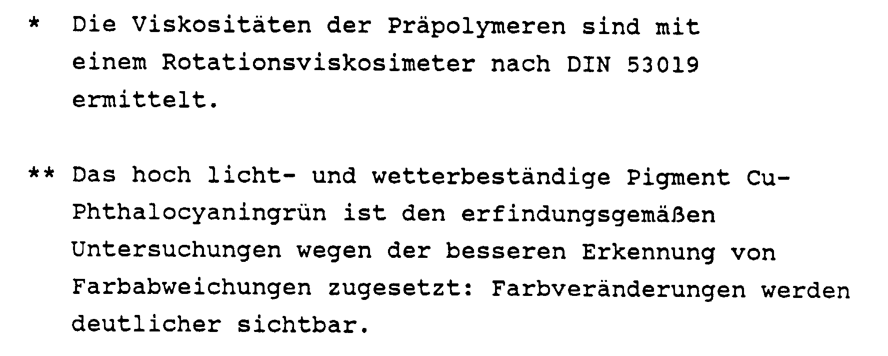

### Beispiel 2

Zunächst wird ein farbloser Grundansatz bestehend aus

| | |
|---|---|
| 100 Teilen | Präpolymeres Methylmethacrylat (Viskosität ca. 1 000 cP) |
| 0,05 Teile | 2-(2-Hydroxy-5-methylphenyl)-benztriazol und |
| 0,1 Teile | 2,2-Azobis-(isobutyronitril) hergestellt. |

Anschließend gibt man eine Farbpaste bestehend aus

| | |
|---|---|
| 0,5 Teilen | Titandioxid |
| 0,025 Teilen | Cu-Phthalocyaningrün |
| 0,025 Teilen | Benzimidazolongelb (Pigment Yellow 151) und |
| 0,3 Teilen | eines löslichen Polymethylmethacrylatharzes, die in |
| 3,0 Teilen | Methylmethacrylat mit einem schnellaufenden Dispergator (Rotor/Stator-Prinzip) dispergiert wird hinzu. |

Der Ansatz wird intensiv gerührt, in eine mit 4 mm distanzierte Silikatglaskammer gefüllt und 15 Stunden bei 45 Grad C im Wasserbad polymerisiert. Die Endpolymerisation erfolgt in einem Temperschrank bei 120 Grad C.
Nach dem Abkühlen und Entformen wird eine undurchsichtige gelbgrüne Acrylglasplatte erhalten.

### Beispiel 3

Zunächst wird ein farbloser Grundansatz bestehend aus

| | |
|---|---|
| 100 Teilen | Präpolymeres Methylmethacrylat (Viskosität ca. 1 000 cp) |
| 0,2 Teile | 2-(2-Hydroxy-5-methylphenyl)-benztriazol und |
| 0,1 Teile | 2,2-Azobis-(isobutyronitril) hergestellt. |

Anschließend gibt man eine Farbpaste bestehend aus

| | |
|---|---|
| 0,5 Teilen | Titandioxid |
| 0,025 Teilen | Cu-Phthalocyaningrün |
| 0,025 Teilen | Benzimidazolongelb (Pigment Yellow 151) und |
| 0,3 Teilen | eines löslichen Polymethylmethacrylatharzes, die in |
| 3,0 Teilen | Methylmethacrylat mit einem schnellaufenden Dispergator (Rotor/Stator-Prinzip) dispergiert wird hinzu. |

Der Ansatz wird intensiv gerührt, in eine mit 4 mm distanzierte Silikatglaskammer gefüllt und 15 Stunden bei 45 Grad C im Wasserbad polymerisiert. Die Endpolymerisation erfolgt in einem Temperschrank bei 120 Grad C.
Nach dem Abkühlen und Entformen wird eine undurchsichtige gelbgrüne Acrylglasplatte erhalten.

### Beispiel 4

Zunächst wird ein farbloser Grundansatz bestehend aus

| | |
|---|---|
| 100 Teilen | Präpolymeres Methylmethacrylat (Viskosität ca. 1 000 cP) |
| 0,1 Teile | Methacrylsäure und |
| 0,1 Teile | 2,2-Azobis-(isobutyronitril) hergestellt. |

Anschließend gibt man eine Farbpaste bestehend aus

| | |
|---|---|
| 0,5 Teilen | Titandioxid |
| 0,025 Teilen | Cu-Phthalocyaningrün |
| 0,025 Teilen | Benzimidazolongelb (Pigment Yellow 151) und |
| 0,3 Teilen | eines löslichen Polymethylmethacrylatharzes, die in |
| 3,0 Teilen | Methylmethacrylat mit einem schnellaufenden Dispergator (Rotor/Stator-Prinzip) dispergiert wird hinzu. |

Der Ansatz wird intensiv gerührt, in eine mit 4 mm distanzierte Silikatglaskammer gefüllt und 15 Stunden bei 45 Grad C im Wasserbad polymerisiert. Die Endpolymerisation erfolgt in einem Temperschrank bei 120 Grad C.
Nach dem Abkühlen und Entformen wird eine undurchsichtige gelbgrüne Acrylglasplatte erhalten.

### Beispiel 5

Zunächst wird ein farbloser Grundansatz bestehend aus

| | |
|---|---|
| 100 Teilen | Präpolymeres Methylmethacrylat (Viskosität ca. 1 000 cP) |
| 0,1 Teile | Methacrylsäure |
| 0,2 Teile | 2-(2-Hydroxy-5-methylphenyl)-benztriazol und |
| 0,1 Teile | 2,2-Azobis-(isobutyronitril) hergestellt. |

Anschließend gibt man eine Farbpaste bestehend aus

| | |
|---|---|
| 0,5 Teilen | Titandioxid |
| 0,025 Teilen | Cu-Phthalocyaningrün |
| 0,025 Teilen | Benzimidazolongelb (Pigment Yellow 151) und |
| 0,3 Teilen | eines löslichen Polymethylmethacrylatharzes, die in |
| 3,0 Teilen | Methylmethacrylat mit einem schnellaufenden Dispergator (Rotor/Stator-Prinzip) dispergiert wird hinzu. |

Der Ansatz wird intensiv gerührt, in eine mit 4 mm distanzierte Silikatglaskammer gefüllt und 15 Stunden bei 45 Grad C im Wasserbad polymerisiert. Die
Endpolymerisation erfolgt in einem Temperschrank bei 120 Grad C.
Nach dem Abkühlen und Entformen wird eine undurchsichtige gelbgrüne Acrylglasplatte erhalten.

### Beispiele 6 - 10

Diese Beispiele sind analog den Beispielen 1 - 5 durchgeführt, jedoch wird anstatt Benzimidazolongelb die gleiche Menge Isoindolinongelb (Pigment Yellow 139) eingesetzt. Man erhält undurchsichtige Acrylglasplatten mit einem graugrünen Farbton.

### Beispiele 11 - 15

Diese Beispiele sind analog den Beispielen 1 - 5 durchgeführt, jedoch wird anstatt Benzimidazolongelb die gleiche Menge Disazokondensationsrot (Pigment Red 242) eingesetzt. Man erhält undurchsichtige Acrylglasplatten mit einem grauen Farbton.

Die erhaltenen Acrylglasplatten werden ein Jahr in der Freibewitterung nach DIN 53 386 bzw. 5 000 Stunden bei künstlicher Bewitterung nach DIN 53 387 gealtert. Anschließend werden die gealterten, sowie die unbewitterten Versuchsplatten mit einem Spektralphotometer vermessen und die Farborte nach DIN 5033 für künstliches Tageslicht D65 bestimmt. Aus diesen Daten werden dann entsprechend DIN 6174 die Farbabstände ΔE zwischen den bewitterten und unbewitterten Proben berechnet.

Die Ergebnisse sind in der anschließenden Tabelle zusammengestellt. Die Beispiele 1 bis 3, 6 bis 8 und 11 bis 13 sind Vergleichsbeispiele.

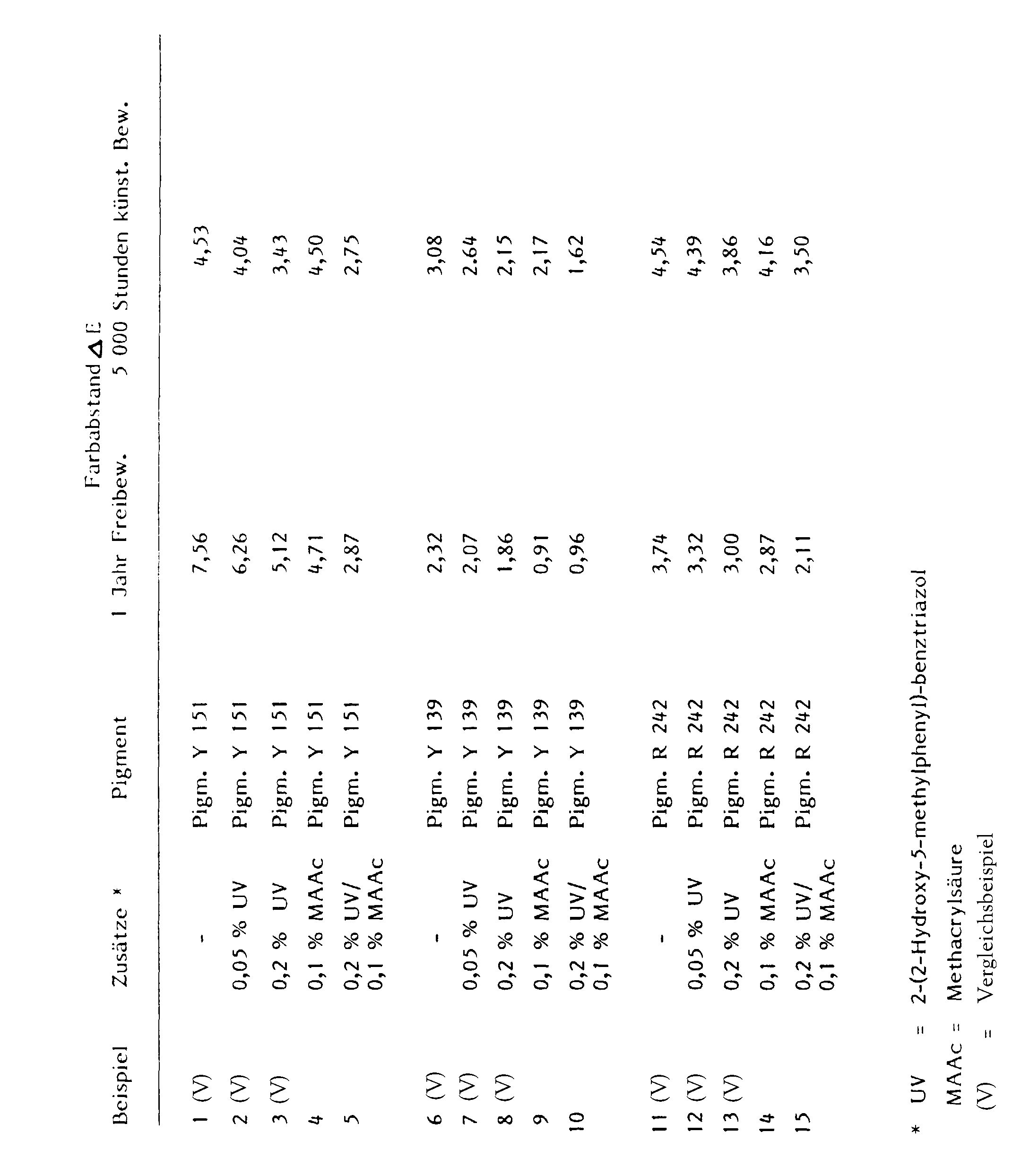

## Patentansprüche

1. Gedeckt eingefärbtes Acrylglas enthaltend ein organisches Pigment bzw. einen organischen Farbstoff dadurch gekennzeichnet,
daß das Glas aus
A) einer Polymermatrix, die aus 70 bis 100 Gew.-% Methylmethacrylat-Monomereinheiten aufgebaut ist,
B) 0,01 bis 5 Gew.-%, bezogen auf das Acrylglas, organischem Pigment bzw. organischen Farbstoff in Kombination mit Weißpigmenten enthaltendem Farbmittel,
C) 0,01 bis 3 Gew.-%, bezogen auf das Acrylglas, einer in der Polymermatrix vorhandenen Säure, die zu mindestens 0.1 Gew.% in der zu polymerisierenden Monomerpraeparation löslich ist, und
D) 0 bis 3 Gew.-%, bezogen auf das Acrylglas, weiteren Zusätzen
besteht.

2. Gedeckt eingefärbtes Acrylglas nach Anspruch 1, dadurch gekennzeichnet, daß B) ein organisches Pigment ist.

3. Gedeckt eingefärbtes Acrylglas nach den Ansprüchen 1 bis 2, dadurch gekennzeichnet, daß die Säure C) eine anorganische Säure, insbesondere Phosphorsäure oder ein saurer Ester der Phosphorsäure ist.

4. Gedeckt eingefärbtes Acrylglas nach den Ansprüchen 1 bis 2, dadurch gekennzeichnet, daß die Säure C) eine organische Säure mit einem Molekulargewicht von 30 bis 1 000 Dalton ist.

5. Gedeckt eingefärbtes Acrylglas nach den Ansprüchen 1 bis 2 und 4, dadurch gekennzeichnet, daß die Säure C) eine ungesättigte organische Säure, wie Acrylsäure, Methacrylsäure, Maleinsäure, Fumarsäure, Itakonsäure und Zimtsäure ist.

6. Gedeckt eingefärbtes Acrylglas nach den Ansprüchen 1 bis 2 und 4 bis 5, dadurch gekennzeichnet, daß die Säure C) in der Polymermatrix einpolymerisiert ist.

7. Gedeckt eingefärbtes Acrylglas nach den Ansprüchen 1 bis 2 und 4 bis 6, dadurch gekennzeichnet, daß B) ein organisches Pigment und C) Acrylsäure und/oder Methacrylsäure ist.

8. Gedeckt eingefärbtes Acrylglas nach den Ansprüchen 1 bis 7, dadurch gekennzeichnet, daß D) ein UV-Absorber ist und in Mengen von 0,05 bis 1 Gew.-% enthalten ist.

9. Verfahren zur Herstellung eines gedeckt eingefärbten Acrylglases mit einem organischen Pigment bzw. mit einem organischen Farbstoff und verbesserter Wetterechtheit, dadurch gekennzeichnet, daß die Polymermatrix, die aus 70 bis 100 Gew.-% Methylmethacrylat-Monomereinheiten aufgebaut ist, in Gegenwart von 0,01 bis 5 Gew.-%, bezogen auf das Acrylglas, eines organischen Pigments bzw. eines organischen Farbstoffes in Kombination mit Weißpigmenten und in Gegenwart von 0,01 bis 3 Gew.-%, bezogen auf das Acrylglas, einer Säure, sowie in Gegenwart von 0 bis 3 Gew.-%, bezogen auf das Acrylglas, weiterer Zusätze, durch Polymerisation hergestellt wird.

10. Verfahren nach Anspruch 9, dadurch gekennzeichnet, daß die Polymermatrix durch Polymerisation von Monomeren oder von Präpolymer-Monomer-Gemischen oder von Monomer-Polymer-Gemischen erhalten wird.

## Claims

1. Opaque coloured acrylic glass comprising an organic pigment or an organic dyestuff, characterised in that the glass is synthesised from
A) a polymer matrix synthesised from 70 to 100 wt.% of methylmethacrylate monomer units,
B) 0.01 to 5 wt.%, based on the acrylic glass, of an organic pigment or a colouring agent comprising an organic dyestuff, in combination with white pigments,
C) 0.01 to 3 wt.%, based on the acrylic glass, of an acid present in the polymer matrix and soluble, in an amount of at least 0.1 wt.%, in the monomer preparation to be polymerised, and
D) 0 to 3 wt.%, based on the acrylic glass, of further additives.

2. An opaque coloured acrylic glass according to Claim 1, characterised in that B) is an organic pigment.

3. An opaque coloured acrylic glass according to Claims 1 to 2, characterised in that the acid C) is an inorganic acid, more particularly a phosphoric acid or an acidic ester of phosphoric acid.

4. An opaque coloured acrylic glass according to Claims 1 to 2, characterised in that the acid C) is an organic acid with a molecular weight of 30 to 1,000 Daltons.

5. An opaque coloured acrylic glass according to Claims 1 to 2 and 4, characterised in that the acid C) is an unsaturated organic acid such as acrylic acid, methacrylic acid, maleic acid, fumaric acid, itaconic acid and cinnamic acid.

6. An opaque coloured acrylic glass according to Claims 1 to 2 and 4 to 5, characterised in that the acid C) is homopolymerised in the polymer matrix.

7. An opaque coloured acrylic glass according to Claims 1 to 2 and 4 to 6, characterised in that B) is an organic pigment and C) is acrylic acid and/or methacrylic acid.

8. An opaque coloured acrylic glass according to Claims 1 to 7, characterised in that D) is an ultraviolet absorber and is present in amounts of 0.05 to 1 wt.%.

9. A process for preparing an opaque coloured acrylic glass comprising an organic pigment or an organic dyestuff and with improved weather resistance, characterised in that the polymer matrix which is synthesised from 70 to 100 wt.% of methylmethacrylate monomer units is prepared by polymerisation, in the presence of 0.01 to 5 wt.% based on the acrylic glass of an organic pigment or an organic dyestuff, in combination with white pigments, and in the presence of 0.01 to 3 wt.% based on the acrylic glass of an acid, as well as in the presence of 0 to 3 wt.% based on the acrylic glass of further additives.

10. A process according to Claim 9, characterised in that the polymer matrix is obtained by polymerising monomers or prepolymer-monomer mixtures or monomer-polymer mixtures.

## Revendications

1. Verre acrylique à coloration opaque, contenant un pigment organique ou un colorant organique,
caractérisé en ce que le verre est composé
A) d'une matrice de polymère qui se compose de 70 à 100% en poids de motifs monomères de méthacrylate de méthyle,
B) de 0.01 à 5% en poids, par rapport au verre acrylique, de matière colorante contenant un pigment organique ou un colorant organique en combinaison avec des pigments blancs,
C) de 0.01 à 3% en poids, par rapport au verre acrylique, d'un acide qui est présent dans la matrice de polymère et qui est soluble, à raison de 0.1% en poids au moins, dans la préparation de monomères à polymériser, et
D) de 0 à 3% en poids, par rapport au verre acrylique, d'autres additifs.

2. Verre acrylique à coloration opaque selon la revendication 1, caractérisé en ce que B) est un pigment organique.

3. Verre acrylique à coloration opaque selon la revendication 1 ou 2, caractérisé en ce que l'acide C) est un acide inorganique, en particulier de l'acide phosphorique ou un ester acide de l'acide phosphorique.

4. Verre acrylique à coloration opaque selon la revendication 1 ou 2, caractérisé en ce que l'acide C) est un acide organique avant un poids moléculaire de 30 à 1000 dalton.

5. Verre acrylique à coloration opaque selon l'une quelconque des revendications 1, 2 et 4, caractérisé en ce que l'acide C) est un acide organique insaturé, tel que l'acide acrylique, l'acide méthacrylique, l'acide maléique, l'acide fumarique, l'acide itaconique et l'acide cinnamique.

6. Verre acrylique a coloration opaque selon l'une quelconque des revendications 1, 2, 4 et 5, caractérisé en ce que l'acide C) est contenu en liaison polymère dans la matrice de polymère.

7. Verre acrylique a coloration opaque selon l'une quelconque des revendications 1, 2 et 4 à 6, caractérisé en ce que B) est un pigment organique et C) est de l'acide acrylique et/ou de l'acide méthacrylique.

8. Verre acrylique à coloration opaque selon l'une quelconque des revendications 1 à 7, caractérisé en ce que D) est un absorbeur d'UV et est contenu dans des proportions de 0.05 à 1% en poids.

9. Procédé de préparation d'un verre acrylique à coloration opaque contenant un pigment organique ou un colorant organique et présentant une solidité aux intempéries améliorée, caractérisé en ce que la matrice de polymère, qui est composée de 70 à 100% en poids de motifs monomères de méthacrylate de méthyle, est préparée par polymérisation en présence de 0.01 à 5% en poids, par rapport au verre acrylique, d'un pigment organique ou d'un colorant organique en combinaison avec des pigments blancs et en présence de 0,01 à 3% en poids, par rapport au verre acrylique, d'un acide, ainsi qu'en présence de 0 à 3% en poids, par rapport au verre acrylique, d'autres additifs.

10. Procédé selon la revendication 9, caractérisé en ce que la matrice de polymère est obtenue par polymérisation de monomères, de mélanges prépolymères/ monomères ou de mélanges monoméres/polymères.
